# EUROPÄISCHE PATENTSCHRIFT

(11) **EP 0 574 674 B1**
(45) Veröffentlichungstag und Bekanntmachung des Hinweises auf die Patenterteilung: **21.06.1995**
(21) Anmeldenummer: 93106603.9
(22) Anmeldetag: 23.04.1993
(51) Int. Cl.: B60T 11/32, B60T 17/04

(54) **Schutzsystem für eine Druckmittelanlage**
Protection system in a pressure installation
Système de protection dans une installation sous pression

(30) Priorität: 13.06.1992 DE 4219448
(43) Veröffentlichungstag der Anmeldung: 22.12.1993
(73) Patentinhaber: WABCO STANDARD GmbH, D-53008 Bonn (DE)
(72) Erfinder: Bornhof, Hans-Ulrich, W-3006 Burgwedel 1 (DE); Deike, Karl-Heinz, W-3017 Pattensen 5 (DE)
(74) Vertreter: Schrödter, Manfred, Dipl.-Ing.

(56) Entgegenhaltungen:
- DE-A- 2 525 146
- FR-A- 2 250 053
- FR-A- 2 291 072

## Beschreibung

Die Erfindung betrifft ein Schutzsystem für eine wenigstens zwei Verbraucherkreise aufweisende Druckmittelanlage gemäß dem Oberbegriff des Patentanspruchs 1.

Ein derartiges Schutzsystem sichert jeden Verbraucherkreis gegen einen unzulässig hohen Druckabfall bei einem Defekt in einem oder mehreren anderen Verbraucherkreisen und in der Versorgungseinrichtung. Der zulässige Wert des Druckabfalls wird durch die Auslegung des Schließdrucks der Überströmventile festgelegt.

In einer mit einem derartigen Schutzsystem ausgerüsteten Druckmittelanlage wird das Auffüllen des dem einen Überströmventil mit dem erhöhten Öffnungsdruck zugeordneten Verbraucherkreises, wenigstens bei bis auf Atmosphärendruck entleerten Verbraucherkreisen, solange zurückgehalten bzw. verzögert, bis der andere Verbraucherkreis bereits auf diesen erhöhten Öffnungsdruck aufgefüllt ist. Ein derartiges Schutzsystem verschafft dem erstgenannten Verbraucherkreis, wenigstens in dem erwähnten entleerten Zustand, Nachrang bzw. dem anderen Verbraucherkreis Vorrang.

Ein so ausgelegtes Schutzsystem kann beispielsweise in einer Fahrzeug-Druckmittelanlage eingesetzt werden, in der der nachrangige Verbraucherkreis ein Parkbremskreis mit durch Druck gelöster Bremse, z. B. einer Federspeicherbremse, und der vorrangige Verbraucherkreis ein Betriebsbremskreis ist. Das Schutzsystem stellt in diesem Fall sicher, daß die Parkbremse erst gelöst werden kann, das Fahrzeug also erst betriebsbereit wird, wenn der Betriebsbremskreis schon weitgehend aufgefüllt ist und wenigstens eine Teilbremswirkung, beispielsweise eine etwa gesetzlich definierte Hilfsbremswirkung, gewährleistet.

Solche Schutzsysteme sind in aufgelöster Bauweise und in kompakter Bauweise bekannt. In der aufgelösten Bauweise sind die Überströmventile als selbständige Baueinheiten in Leitungen zwischen der Versorgungseinrichtung und dem jeweiligen Verbraucherkreis angeordnet. In der kompakten Bauweise sind die Überströmventile in einer Baueinheit zusammengefaßt, die nach der Zahl der Verbraucherkreise als "Zwei-, Drei- usw.- kreisschutzventil" oder, allgemeiner, als "Mehrkreisschutzventil" bezeichnet wird.

Solche Schutzsysteme sind in Druckmittelanlagen aller Druckmittel einsetzenden technischen Gebiete gebräuchlich. Beispielhaft für solche technischen Gebiete seien außer dem bereits erwähnten der Fahrzeug-Druckmittelanlagen Steuerungsanlagen aller Art und Schienenfahrzeuge genannt. Als Druckmittel wird im allgemeinen Druckluft eingesetzt, aber auch andere komprimierte Gase kommen in Betracht.

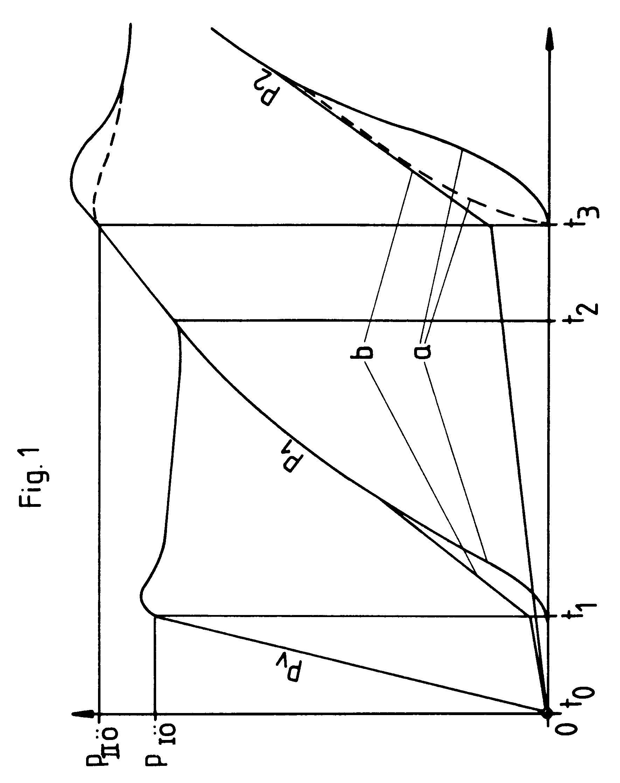

Figur 1 zeigt in durchgezogenen Linien grundsätzliche Druckverläufe als Funktionen der Zeit beim Befüllen der Verbraucherkreise einer Druckmittelanlage mit zwei Verbraucherkreisen mit Schutzsystemen nach dem Stand der Technik. Im Zeitpunkt t₀ wird der der Versorgungseinrichtung zugehörige Druckerzeuger zu- oder eingeschaltet. Der Druck in der Versorgungseinrichtung, der Versorgungsdruck p_{V}, steigt daraufhin an. Für die Verläufe der Drücke p₁ und p₂ in den Verbraucherkreisen sind zwei Alternativen a und b dargestellt, die im Bereich höherer Drücke zusammenfallen. Die Alternative b tritt auf, wenn die Verbraucherkreise mit der Versorgungseinrichtung in bekannter Weise zwecks Erleichterung des Öffnens der Überströmventile parallel zu diesen durch Drossel-Bypasse verbunden sind. Deshalb findet bei dieser Alternative von Anfang an ein langsamer Druckaufbau in den Verbraucherkreisen statt. Die Alternative a tritt auf, wenn die Drossel-Bypasse nicht vorhanden sind. Bei dieser Alternative tritt der erste Druckaufbau in den Verbraucherkreisen erst nach dem Öffnen des jeweiligen Überströmventils auf.

Im Zeitpunkt t₁ hat p_{V} den Wert des geringeren Öffnungsdrucks p_{Iö} des anderen Überströmventils erreicht. Nunmehr steigt der Druck p₁ in dem diesem Überströmventil zugeordneten vorrangigen Verbraucherkreis an (Alternative a) bzw. schneller an (Alternative b). Dabei steigt, weil das Überströmventil zunächst nur wenig öffnet und deshalb nicht sofort die volle Fördermenge des Druckerzeugers durchlassen kann, p_{V} zunächst über p_{Iö} an. Anschließend, mit zunehmendem Öffnungsquerschnitt des Überströmventils, fällt p_{V} jedoch etwas unter p_{Iö} ab, weil sich dann eine praktisch unbehinderte Verbindung zwischen dem vergleichsweise großen Volumen mit noch geringem Druck des Verbraucherkreises und der Versorgungseinrichtung einstellt. Der genannte Abfall von p_{V} unter p_{Iö} führt nicht zu einem erneuten Schließen des Überströmventils, weil, wie bei Überströmventilen üblich, der sich aufbauenden Druck p₁ im Verbraucherkreis das Offenhalten des Überströmventils unterstützt. Im Zeitpunkt t₂ hat voller Druckausgleich zwischen der Versorgungseinrichtung und dem vorrangigen Verbraucherkreis stattgefunden. Von diesem Zeitpunkt ab fallen die Verläufe von p_{V} und p₁ zusammen. Im Zeitpunkt t₃ haben p_{V} und p₁ den Wert des erhöhten Eröffnungsdrucks p_{IIö} des einen Überströmventils erreicht. Nunmehr steigt der Druck p₂ in dem diesem Überströmventil zugeordneten nachrangigen Verbraucherkreis an (Alternative a) bzw. schneller an (Alternative b). Dabei verhält sich p_{V} (und damit p₁) tendenziell und aus dem gleichen Grunde wie nur p_{V} beim Öffnen des anderen Überströmventils, d. h. er steigt zunächst an.

Der von dem erhöhten Öffnungsdruck p_{IIö} ausgehende Druckanstieg des Versorgungsdrucks p_{V} (und damit von p₁) ist oft nachteilig. Dieses ist beispielsweise dann der Fall, wenn dieser Druckanstieg in die Nähe des Nenndrucks oder über den Nenndruck der Druckmittelanlage hinaus führt und zum Abschalten des Druckerzeugers, speziell über einen Druckregler, führt, woraus die Unmöglichkeit oder eine Erschwerung des Auffüllens des nachrangigen Verbraucherkreises resultieren kann.

Aus der DE 23 55 456 C3 und der DE 25 25 146 B2 sind Schutzsysteme bekannt, deren sämtliche Überströmventile Betätigungsglieder aufweisen, die eine zweigeteilte Wirkfläche aufweisen. Die Teile der Wirkfläche sind über eine Drossel verbunden, so daß bei geschlossenem Überströmventil beide Teilflächen dem Versorgungsdruck ausgesetzt sind. Nach dem Öffnen des Überströmventils kann der Druck auf der einen Teilfläche in den zugeordneten Verbraucherkreis entweichen mit der Folge, daß diese Teilfläche sozusagen abgeschaltet wird. Da bei den noch nicht geöffneten Überströmventilen dieses Schutzsystems die volle Wirkfläche wirksam bleibt, übt der Versorgungsdruck auf die Betätigungsglieder dieser Überströmventile eine größere Öffnungskraft als auf das Betätigungsglied des bereits geöffneten Überströmventils aus mit dem Ergebnis, daß auch die noch geschlossenen Überströmventile mit Sicherheit öffnen.

Der vorliegenden Erfindung liegt die Aufgabe zugrunde, bei einem Schutzsystem der eingangs genannten Art den oben erwähnten Druckanstieg beim Öffnen des einen Überströmventils mit dem erhöhten Öffnungsdruck mit einfachen Mitteln wenigstens zu verringern. Diese Aufgabe wird durch die in dem Patentanspruch 1 angegebene Erfindung gelöst. Vorteilhafte Weiterbildungen und Ausgestaltungen sind in den Unteransprüchen angegeben.

Die Wirkung der Erfindung kann beeinträchtigt werden, wenn sich infolge einer Undichtigkeit zwischen der dem Versorgungsdruck ausgesetzten Wirkfläche und der Zusatzwirkfläche bei geschlossenem Überströmventil unter der Zusatzwirkfläche ein Druck aufbauen kann. Eine solche Undichtigkeit ist als Folge unvermeidbarer Fertigungsungenauigkeiten und/oder betriebsbedingter Verschmutzungen möglich. Eine solche Störung kann durch eine Drossel unschädlich gemacht werden, welche wenigstens bei geschlossenem zugeordneten Überströmventil eine ständige Verbindung der Zusatzwirkfläche mit dem zugeordneten Verbraucherkreis herstellt.

Weitere Vorteile der Erfindung ergeben sich aus deren nunmehr folgender Erläuterung anhand von Zeichnungen. Unter durchgehender Verwendung einheitlicher Bezugszeichen für Elemente mit gleichen Funktionen zeigen
Figur 1 ein Diagramm mit grundsätzlichen Druckverläufen,
Figur 2 schematisch ein Schutzsystem in aufgelöster Bauweise,
Figur 3 ein Schutzsystem in kompakter Bauweise,

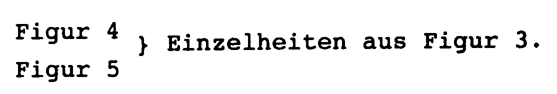

Auf Figur 1 ist vorstehend und wird weiter unten näher eingegangen.

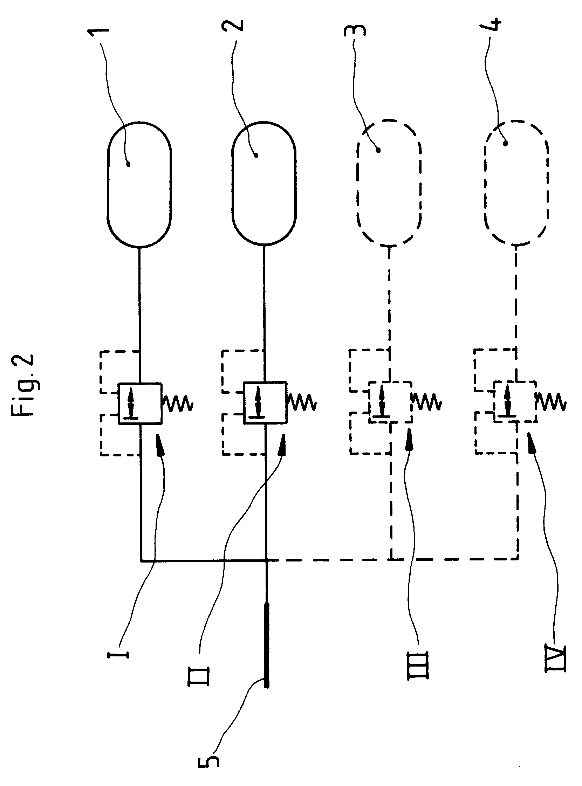

Figur 2 zeigt in durchgezogenen Linien als Grundausführung ein Schutzsystem (I, II) für eine Druckmittelanlage mit zwei Verbraucherkreisen 1 und 2, die durch Vorratsbehälter symbolisiert sind. Das Schutzsystem (I, II) weist für jeden Verbraucherkreis 1 bzw. 2 ein Überströmventil I bzw. II auf.

Die Überströmventile I und II sind als selbständige Baueinheiten dargestellt und in nicht bezeichneten Leitungen zwischen einer durch eine Versorgungsleitung (5) symbolisierte Versorgungseinrichtung und dem jeweils zugeordneten Verbraucherkreis 1 bzw. 2 angeordnet. Das Schutzsystem (I, II) ist also in offener Bauweise ausgeführt.

Die Überströmventile I und II sind als solche mit begrenzter Rückströmung dargestellt. Ein Schutzsystem mit solchen Überströmventilen gewährleistet bis zu deren Schließen einen Druckaustausch zwischen den Verbraucherkreisen. Eine Rückströmung aus den Verbraucherkreisen 1 und 2 in die Versorgungseinrichtung muß durch eine nicht dargestellte geeignete Sperreinrichtung, z. B. ein Rückschlagventil, verhindert werden. Auch Schutzsysteme mit Überströmventilen ohne Rückströmung sind üblich.

Das Überströmventil II hat, wenigstens wenn die Verbraucherkreise 1 und 2 auf Atmosphärendruck entleert sind, einen höheren Öffnungsdruck p_{IIö} als das Überströmventil I, mit der Folge, daß der Verbraucherkreis 2 gegenüber dem Verbraucherkreis 1 nachrangig aufgefüllt wird.

Durch gestrichelt dargestellte weitere Überströmventile III und IV sowie diesen zugeordnete Verbraucherkreise 3 und 4 ist angedeutet, daß die bisher beschriebene Grundausführung zwecks Verwendbarkeit für eine Druckmittelanlage mit mehr Verbraucherkreisen erweitert werden kann. Die weiteren Verbraucherkreise 3 und 4 können beispielsweise ein zweiter Betriebsbremskreis und ein Nebenverbraucherkreis in einer Fahrzeug-Druckmittelanlage sein.

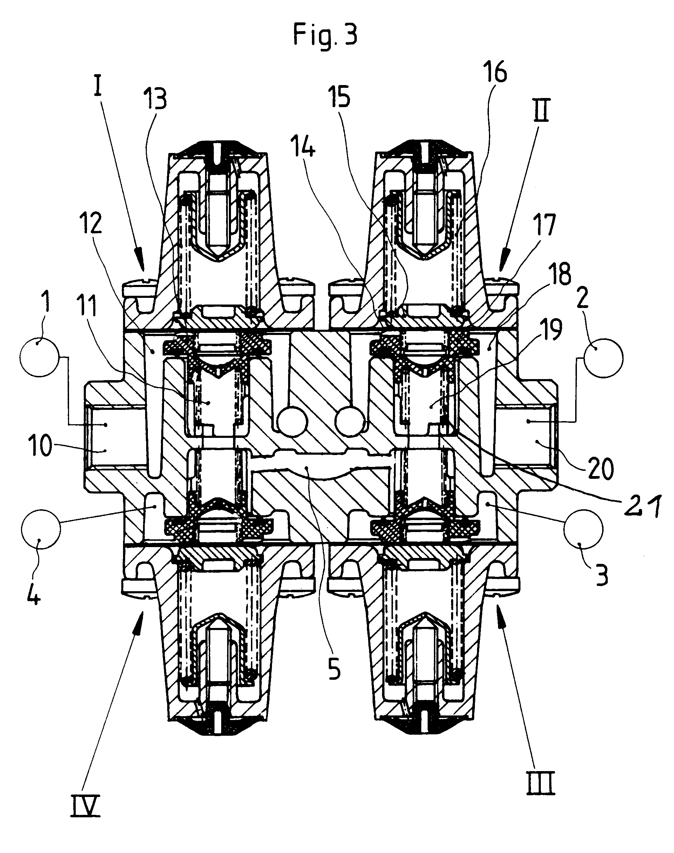

Für Einzelheiten der Überströmventile gelten die nachstehenden Ausführungen zu den Figuren 3 bis 5 mit.

Figur 3 zeigt ein Schutzsystem in kompakter Bauweise in Gestalt eines Vierkreisschutzventils, in dem die soeben erwähnten Überströmventile I, II, III und IV in einer Baueinheit zusammengefaßt sind. Selbstverständlich kann beim Vorhandensein von mehr oder weniger Verbraucherkreisen die Anzahl der zu einer Baueinheit zusammengefaßten Überströmventile entsprechend anders sein.

Die Überströmventile I, III und IV sind im Rahmen der unvermeidbaren Herstellungsungenauigkeiten baugleich und funktionsgleich, so daß die folgenden Erläuterungen zum Überströmventil I für die Überströmventile III und IV mitgelten.

Die innerhalb des Vierkreisschutzventils kammerartig ausgebildete Versorgungsleitung (5) ist über Stichkanäle mit einer Anströmkammer (11) des Überströmventils I und einer Anströmkammer (19) des Überströmventils II verbunden.

Das Überströmventil II enthält ein Ventil (17, 27), welches den Durchgang zwischen der Anströmkammer (19) und einer Auslaßkammer (18) beherrscht, die über einen Anschluß (20) mit dem zugeordneten Verbraucherkreis (2) verbunden ist. Die Auslaßkammer (18) wird durch eine Membran (14) begrenzt, die abdichtend zwischen dem Gehäuse und einem Gehäusedeckel eingespannt ist.

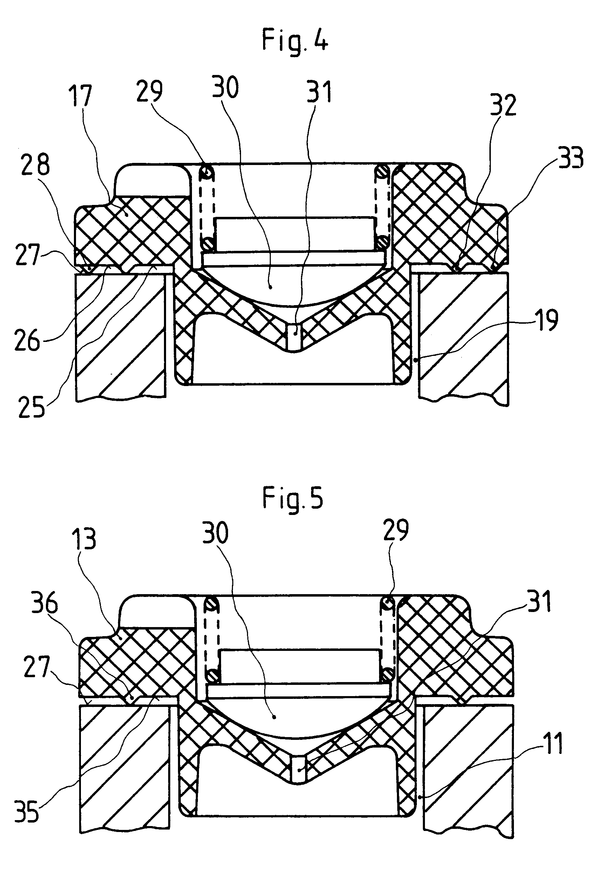

Zu dem Überströmventil II zeigt Figur 4 Einzelheiten des Ventils (17, 27) in vergrößertem Maßstab. Das Ventil (17, 27) wird von einem Betätigungsglied (17) und einem gehäusefesten Ventilsitz (27) gebildet. Auf der dem Ventilsitz (27) und damit der Anströmkammer (19) zugewandten Seite des Betätigungsglieds (17) sind, jeweils umlaufend, ein äußerer Dichtrand (33) und innerhalb desselben ein innerer Dichtrand (32) angeordnet. Der innere Dichtrand (32) schließt ein und definiert dadurch eine dem Druck in der Anströmkammer (19) ausgesetzte Wirkfläche (25). Der äußere Dichtrand (33) und der innere Dichtrand (32) schließen zwischen sich ein und definieren dadurch eine Zusatzwirkfläche (26). Bei geschlossenem Überströmventil II sind die Wirkfläche (25) und die Zusatzwirkfläche (26) voneinander getrennt.

In dem äußeren Dichtrand (33) ist noch eine Drossel in Gestalt eines Durchbruchs (28) dargestellt. In dem Betätigungsglied (17) sind ferner eine die Anströmkammer (19) mit der Auslaßkammer (18) verbindende Drosselbohrung (31) sowie ein Rückschlagventil (17, 30) mit einem Ventilglied (30) und einer Schließfeder (29) dargestellt. Diese Merkmale stellen Fortbildungen da, die zunächst als nicht vorhanden angenommen werden.

Das Betätigungsglied (17) ist in Richtung auf den Ventilsitz (27) und damit in Schließrichtung des Ventils (17, 27) von einer einstellbaren Regelfeder (16) - siehe Figur 3 - vorgespannt, die über einen Federteller (15) und die Membran (14) auf das Betätigungsglied (17) wirkt.

Das Überströmventil I kann auf jede Weise ausgebildet sein, welche die weiter unten beschriebenen Wirkungen erbringt. Im Ausführungsbeispiel gemäß Figur 3 enthält das Überströmventil I ein Ventil (13, 27), welches den Durchgang zwischen der Anströmkammer (11) dieses Überströmventils und einer Auslaßkammer (12) beherrscht, die über einen Anschluß (10) mit dem zugeordneten Verbraucherkreis 1 verbunden ist.

Zu dem Überströmventil I sind in Figur 5 Einzelheiten des Ventils (13, 27) in vergrößertem Maßstab dargestellt. Das Ventil (13, 27) besteht aus einem Betätigungsglied (13) und einem gehäusefesten Ventilsitz, der dem Ventilsitz des Überströmventils II gleich ist und deshalb mit dem gleichen Bezugszeichen (27) belegt ist.

Auf seiner dem Ventilsitz (27) und damit der Anströmkammer (11) zugewandten Seite weist das Betätigungsglied (13) nur einen umlaufenden Dichtrand (36) auf, der eine Wirkfläche (35) einschließt und dadurch definiert. Eine Zusatzwirkfläche weist dieser Ventilkörper (13) nicht auf.

Im übrigen gelten für das Überströmventil I die zum Überströmventil II gemachten Aussagen entsprechend.

Die Ventile (13, 27 und 17, 27) und damit die Überströmventile I und II werden durch einen Überschuß der Kraft der jeweiligen Regelfeder (16) über die auf das jeweilige Betätigungsglied (13 bzw. 17) und die jeweilige Membran (14) wirkenden Druckkräfte geschlossen bzw. geschlossen gehalten und durch einen Überschuß der genannten Druckkräfte geöffnet bzw. offen gehalten. Öffnungsdruck p_{Iö} bzw. p_{IIö} der Überströmventile I bzw. II ist jeweils der Druck in der Versorgungsleitung (5) und damit in den Anströmkammern (11 und 19), bei dem sich der Dichtrand (36) des Ventilkörpers (13) des Überströmventils I bzw. der innere Dichtrand (32) des Ventilkörpers (17) des Überströmventils II gerade von dem jeweiligen Dichtsitz (27) abheben. Solange in einem Verbraucherkreis (1 bzw. 2) nur Atmosphärendruck herrscht, wird der Öffnungsdruck des jeweiligen Überströmventils I bzw. II nur von der Kraft der Regelfeder (16) und der Größe der Wirkfläche (35 bzw. 25) bestimmt. Die Einstellung des Öffnungsdrucks kann also sowohl durch die Einstellung der Regelfeder (16) als auch durch die Größe der jeweiligen Wirkfläche (35 bzw. 25) als auch durch eine Kombination beider Maßnahmen erfolgen. Ist in einem Verbraucherdruck ein höherer Druck als Atmosphärendruck vorhanden, so wirkt dieser über die freie Fläche der jeweiligen Membran (14) der Kraft der jeweiligen Regelfeder (16) entgegen, so daß ein geringerer Druck in der Versorgungsleitung (5) bzw. der jeweiligen Anströmkammer (11) bzw. (19) als p_{Iö} bzw. p_{IIö} zum Öffnen des jeweiligen Überströmventils I bzw. II ausreicht, mit anderen Worten: so daß der Öffnungsdruck sinkt.

Nunmehr wird das Verhalten der Überströmventile I und II, ausgehend von auf Atmosphärendruck entleerter Versorgungsleitung (5) und gleichermaßen entleerten Verbraucherkreisen (1 und 2), mit Hilfe des Diagramms gemäß Figur 1 näher untersucht. Dabei wird unterstellt, daß der Öffnungsdruck p_{IIö} des Überströmventils II durch entsprechende Einstellung der Regelfeder (16) und/oder entsprechende Bemessung der Wirkfläche (25) des Betätigungsglieds (17) höher liegt als der Öffnungsdruck p_{Iö} des Überströmventils I.

Nach dem Zu- oder Einschalten des Druckerzeugers im Zeitpunkt t₀ steigt zunächst nur der Druck in der Versorgungsleitung (5) und in den Anströmkammern (11 bzw. 19), der Versorgungsdruck p_{V}, an. Erreicht p_{V} im Zeitpunkt t₁ den Öffnungsdruck p_{Iö} des Überströmventils I, so überwindet die von diesem Druck auf der Wirkfläche (35) des Betätigungsglieds (13) erzeugte Druckkraft die Kraft der Regelfeder (16) mit der Folge, daß das Betätigungsglied (13) gegen die ÐKraft der Regelfeder (16) verschoben und der Dichtrand (36) von dem Ventilsitz (27) abgehoben wird. Das Ventil (13, 27) und damit das Überströmventil I öffnet. Der Druck in der Auslaßkammer (12) und damit im Verbraucherkreis (1) verläuft nunmehr nach Alternative a. Der Öffnungsquerschnitt des Ventils (13, 27) ist zunächst so gering, daß das Ventil (13, 27) weniger Druckmittel aus der Anströmkammer (11) in die Auslaßkammer (12) und damit dem Verbraucherkreis (1) durchläßt als der Druckerzeuger fördert. p_{V} steigt deshalb anschließend an t₁ zunächst weiter an. Mit zunehmendem Anstieg von p_{V} und von p₁ in der Auslaßkammer (12) und damit auf der freien Fläche der Membran (14) vergrößert sich der Öffnungsquerschnitt des Ventils (13, 27) mit der Folge, daß der Anstieg von p_{V} zunächst abflacht und dann p_{V} ein Maximum erreicht.

Bei weiterem Öffnen des Ventils (13, 27) wird dessen Öffnungsquerschnitt schließlich so groß, daß das Ventil (13, 27) mehr durchlassen kann als der Druckerzeuger fördert mit der Folge, daß wegen des noch geringen Drucks in dem vergleichsweise großem Volumen des Verbraucherkreises 1 sich das Druckmittel in der Versorgungsleitung (5) und in der Anströmkammer (11) entspannt, also p_{V} abfällt. Wie das Diagramm zeigt, kann dabei p_{V} bis unter p_{Iö} abfallen. Dieser Abfall führt nicht zu einem Schließen des Ventils (13, 27) und damit des Überströmventils I, weil inzwischen die Kraft von p₁ auf der freien Fläche der Membran (14) ausreichend groß ist, das Ventil (13, 27) offenzuhalten. Im Zeitpunkt t₂ haben sich p_{V} und p₁ angeglichen. Von diesem Zeitpunkt ab steigen p_{V} und p₁ gemeinsam in Richtung des durch die Versorgungseinrichtung festgelegten Nenndrucks der Druckmittelanlage an.

p_{V} steht auch stets in der Anströmkammer (19) des Überströmventils II und damit auf der Wirkfläche (25) von dessen Betätigungsglied (17) an. Im Zeitpunkt t₃ hat p_{V} (und damit p₁) den Wert des Öffnungsdrucks p_{IIö} des Überströmventils II erreicht, wodurch sich das Betätigungsglied (17) von dessen Ventil (17, 27) gegen die Kraft der Regelfeder (16) bewegt und der innere Dichtrand (32) von dessen Ventilkörper (17) sich von dem Ventilsitz (27) abhebt, das Ventil (17, 27) und damit das Überströmventil II also öffnet. Der äußere Dichtrand (33) des Betätigungsglied (17) kann nunmehr je nach seiner Auslegung oder entsprechend seiner Toleranzlage zu dem inneren Dichtrand (32) entweder noch nicht von dem Ventilsitz (27) abgehoben haben oder ebenfalls schon geringfügig von dem Ventilsitz (27) abgehoben haben. In beiden Fällen baut das durch den Öffnungsquerschnitt des Ventils (17, 27) hindurchtretende Druckmittel zwischen den Dichträndern (32 und 33) und damit auf der Zusatzwirkfläche (26) des Betätigungsglieds (17) einen Druck und damit eine die Druckkraft auf der Wirkfläche (25) unterstützende Druckkraft auf, die zu einem schnellen weiteren Öffnen des Ventils (17, 27) und damit des Überströmventils II führt. Im Falle schon abgehobenen äußeren Dichtrands ist dieser Druck ein Staudruck infolge des Strömungswiderstands zwischen dem äußeren Dichtrand (33) und dem Ventilsitz (27). Zur Erzeugung der unterstützenden Druckkraft genügt schon ein geringer Wert des Drucks (bzw. Staudrucks). Die zugehörigen Verläufe des Drucks p₂ im zugeordneten Verbraucherkreis 2 und der Drücke p_{V} sowie p₁ sind in Figur 1 gestrichelt eingezeichnet. Der gestrichelte Linienzug um den Wert p_{IIö} herum macht deutlich, daß infolge des schnellen Öffnens des Überströmventils II der Anstieg von p_{V} (und damit von p₁) geringer ausfällt als er bei einem gleichen Öffnungsverhalten beider betrachteten Überströmventile gemäß der durchgezogenen Linie zu erwarten wäre.

Die Anordnung der Zusatzwirkfläche (26) an dem Betätigungsglied (17) des Überströmventils II erbringt also den angestrebten Erfolg, nämlich eine Verringerung des beim Öffnen des nachrangigen Überströmventils II auftretenden Druckanstiegs des Versorgungsdrucks pᵥ (und damit von p₁).

Die begrenzte Rückströmung der Überströmventile folgt aus deren Schließverhalten. Bei einem Druckmittelverbrauch oder einem Druckmittelverlust in einem oder mehreren Verbraucherkreisen oder in der Versorgungseinrichtung stromabwärts der Sperreinrichtung pflanzt sich ein dadurch etwa hervorgerufener Druckabfall infolge der begrenzten Rückströmung der Überströmventile durch das jeweilige Ventil (13, 27 bzw. 17, 27) hindurch in den anderen bzw. die anderen Verbraucherkreise fort. Jedes Überströmventil schließt, wenn die Kraft der jeweiligen Regelfeder (16) die von dem Druck des jeweiligen Verbraucherkreises auf die freie Fläche der jeweiligen Membran (14) ausgeübte Druckkraft überwindet. Der Druck des jeweiligen Verbraucherkreises, bei dem das Schließen des jeweiligen Überströmens erfolgt, ist dessen Schließdruck. Er wird in der Regel an der Versorgungsleitung (5) gemessen. Der Schließdruck jedes Überströmventils ist geringer als der Öffnungsdruck, weil die freie Fläche der jeweiligen Membran (14) größer als die jeweilige Wirkfläche (35 bzw. 25) des jeweiligen Betätigungsgliedes (13 bzw. 17) ist und deshalb die Kraft der jeweiligen Regelfeder (16) die auf der freien Fläche der jeweiligen Membran (14) erzeugte Druckkraft erst bei einem geringeren Wert des Drucks des Verbraucherkreises überwindet. Im Falle eines Defekts in einem Verbraucherkreis bzw. in der Versorgungseinrichtung sind alle anderen Verbraucherkreise bzw. alle Verbraucherkreise beim jeweiligen Schließdruck des jeweiligen Überströmventils gesichert.

Eine Feder (21) wirkt auf das Betätigungsglied (13 bzw. 17) jedes Überströmventils I bzw. II in Richtung des Vorratsdrucks. Ohne die Feder (21) würden die Ventile (13, 27 bzw. 17, 27) im Falle eines Druckgefälles von der jeweiligen Auslaßkammer (12 bzw. 18) zur jeweiligen Anströmkammer (11 bzw. 19) hin als Rückschlagventil wirken und damit praktisch jede Rückströmung und damit einen Druckaustausch zwischen den Verbraucherkreisen unterbinden. Es liegt auf der Hand, daß die Feder (21) das Öffnen des jeweiligen Ventils (13, 27 bzw. (17, 27) unterstützt. Die Kraft der Feder (21) ist jedoch so gering bemessen, daß diese Unterstützung in den vorstehenden Erläuterungen unberücksichtigt bleiben konnte.

Jetzt wird noch auf die Fortbildungen eingegangen, die weiter oben zunächst als nicht vorhanden angenommen worden sind.

Der innere Dichtrand (32) des Betätigungsglied (17) des nachrangigen Überströmventils II kann als Folge unvermeidbarer Fertigungsungenauigkeiten und/oder betriebsbedingter Verschmutzungen undicht sein. Das durch die Undichtigkeit hindurchleckende Druckmittel kann in dem Raum zwischen den Dichträndern (32 und 33) und damit auf der Zusatzwirkfläche (36) einen Druck aufbauen, der zu einem vorzeitigen Öffnen des Ventils (17, 27) und damit des Überströmventils II führen kann. Dem Durchbruch (28) in dem äußeren Dichtrand (33) obliegt nun, diese Leckmenge in die Auslaßkammer (18) und den zugeordneten Verbraucherkreis 2 abströmen zu lassen und dadurch bei geschlossenem Ventil (17, 27) einen Druckaufbau infolge der Undichtigkeit auf der Zusatzwirkfläche (26) zu verhindern. Der Durchbruch (28) muß als Drossel so bemessen sein, daß er bei wenig geöffnetem Ventil (17, 27) und damit wenig geöffnetem Überströmventil II den Druckaufbau auf der Zusatzwirkfläche (26) nicht verhindert bzw. den Strömungswiderstand zwischen äußerem Dichtrand (33) und dem Ventilsitz (27) für das den Öffnungsquerschnitt durchströmende Druckmittel nicht aufhebt, damit sich in diesem Zustand der notwendige Druck in dem Raum zwischen den Dichträndern (32 und 33) und damit auf der Zusatzwirkfläche (26) aufbauen kann.

Die Drosselbohrung (31) in den Betätigungsgliedern (13 und 17) läßt, solange der Versorgungsdruck p_{V} höher als der Druck p₁ bzw. p₂ in dem jeweiligen Verbraucherkreis (1 bzw. 2) ist, Druckmittel aus der jeweiligen Anströmkammer (11 bzw. 19) und damit aus der Versorgungsleitung (5) in die jeweilige Auslaßkammer (12 bzw. 18) und damit in den jeweiligen Verbraucherkreis (1 bzw. 2) durchtreten. Dadurch baut sich bei anfänglich auf Atmosphärendruck entleertem jeweiligen Verbraucherkreis (1 bzw. 2) auf der freien Membranfläche eine das Öffnen des jeweiligen Ventils (13, 27 bzw. 17, 27) und damit des jeweiligen Überströmventils I bzw. II unterstützende Druckkraft auf und wird im Falle anfänglich bereits vorhandenen Drucks p₁ bzw. p₂ in den Verbraucherkreisen die auf freie Fläche der Membran (14) wirkende Druckkraft erhöht. Für den Fall anfänglich auf Atmosphärendruck entleerter Verbraucherkreise (1 und 2) verlaufen bei Vorhandensein der Drosselbohrungen (31) die Drücke p₁ und p₂ entsprechend Alternative b im Diagramm.

Das von dem jeweiligen Betätigungsglied (13 bzw. 17) und dem in dessen Innenraum angeordneten Ventilglied (30) mit Rückstellfeder (29) gebildete Rückschlagventil (13, 30 bzw. 17, 30) verhindert bei auf einen Vorratsdruck p_{V} unterhalb des jeweiligen Verbraucherdrucks p₁ bzw. p₂ entleerter Versorgungsleitung (5) einen entsprechenden Druckabfall in den Verbraucherkreisen (1 bzw. 2) über die jeweilige Drosselbohrung (31).

Die Wirkfläche und die Zusatzwirkfläche an dem Betätigungsglied des Überströmventils II können auch auf jede andere geeignete Weise hergestellt sein. Beispielsweise können einer oder beide Dichtränder am Gehäuse angeordnet sein. Der den äußeren Dichtrand (33) radial durchdringend dargestellte Durchbruch (28) kann für mehrere Durchbrüche stehen. Die von ihm verkörperte Drossel kann auch in nicht dargestellter Weise als bei geschlossenem Ventil (17, 27) ständig offener Spalt zwischen dem äußeren Dichtrand (33) und dem Ventilsitz (27) am ganzen Umfang oder an einem Teil des Umfangs des äußeren Dichtrands (33) ausgebildet sein. Die Drossel kann auch in nicht dargestellter Weise auf einen radial verlaufenden und einem als Axialspalt ausgebildeten Teil aufgeteilt sein.

Abschließend sei darauf hingewiesen, daß sich der Schutzbereich der vorliegenden Erfindung nicht in dem Ausführungsbeispiel mit seinen Ausgestaltungen und Fortbildungen erschöpft, sondern alle Ausgestaltungen umfaßt, deren Merkmale sich den Patentansprüchen unterordnen.

## Patentansprüche

1. Schutzsystem für eine wenigstens zwei Verbraucherkreise (1, 2) aufweisende Druckmittelanlage, mit einem Überströmventil (I, II) für jeden Verbraucherkreis (1, 2), das zwischen einer Versorgungseinrichtung, z.B Versorgungsleitung (5), und dem jeweils zugeordneten Verbraucherkreis (1 bzw. 2) angeordnet ist, wobei das eine Überströmventil (II) wenigstens bei Atmosphärendruck in den Verbraucherkreisen (1, 2) einen erhöhten Öffnungsdruck hat und wobei wenigstens das eine Überströmventil (II) ein Betätigungsglied (17) mit einer dem Versorgungsdruck ausgesetzten Wirkfläche (25) aufweist,
dadurch gekennzeichnet,
daß das Betätigungsglied (17) des einen Überströmventils (II) eine, zwischen seiner dem Versorgungsdruck ausgesetzten Wirkfläche (25) und dem zugeordneten Verbraucherkreis (2) angeordnete, Zusatzwirkfläche (26) aufweist.

2. Schutzsystem nach Anspruch 1,
dadurch gekennzeichnet,
daß die Zusatzwirkfläche (26) wenigstens bei geschlossenem Überströmventil (II) über eine Drossel, z.B Durchbruch (28), ständig mit dem zugeordneten Verbraucherkreis (2) verbunden ist.

3. Schutzsystem nach Anspruch 2, worin die Wirkfläche (25) und die Zusatzwirkfläche (26) durch Dichtränder an dem Betätigungsglied (17) und/oder an dem Gehäuse begrenzt sind,
dadurch gekennzeichnet,
daß die Drossel als wenigstens ein Durchbruch (28) des die Zusatzwirkfläche (26) gegenüber dem Verbraucherkreis (2) begrenzenden Dichtrands (33) ausgebildet ist.

4. Schutzsystem nach Anspruch 2, worin die Wirkfläche (25) und die Zusatzwirkfläche (26) durch Dichtränder an dem Betätigungsglied (17) und/oder an dem Gehäuse begrenzt sind,
dadurch gekennzeichnet,
daß die Drossel wenigstens teilweise als wenigstens teilweise umlaufender Spalt an dem die Zusatzwirkfläche (26) gegenüber dem zugeordneten Verbraucherkreis (2) begrenzenden Dichtrand (33) ausgebildet ist.

5. Schutzsystem nach einem der Ansprüche 3 oder 4,
dadurch gekennzeichnet, daß der Durchbruch (28) wenigstens teilweise den zugeordneten Dichtrand (33) radial durchdringt.

## Claims

1. A protection system for a pressure medium installation having at least two load circuits (1, 2), and an overflow valve (I, II) for each load circuit (1, 2), which valve is arranged between a supply arrangement, for example supply line (5), and the respective associated load circuit (1, 2), wherein at least at atmospheric pressure in the load circuits (1, 2) one overflow valve (II) has an increased opening pressure, and wherein at least that one overflow valve (II) has an actuating member (17) having an effective area (25) exposed to the supply pressure,
characterized in that
the actuating member (17) of the one overflow valve (II) has an additional effective area (26) arranged between its effective area (25) exposed to the supply pressure and the associated load circuit (2).

2. A protection system according to claim 1,
characterized in that,
at least when the overflow valve (II) is closed, the additional effective area (26) is permanently connected by way of a throttle, for example opening (28), to the associated load circuit (2).

3. A protection system according to claim 2, in which the effective area (25) and the additional effective area (26) are bounded by sealing edges on the actuating member (17) and/or on the housing,
characterized in that
the throttle is in the form of at least one opening (28) in the sealing edge (33) bounding the additional effective area (26) with respect to the load circuit (2).

4. A protection system according to claim 2, in which the effective area (25) and the additional effective area (26) are bounded by sealing edges on the actuating member (17) and/or on the housing, characterized in that the throttle is at least partially in the form of an at least partially circumferential gap at the sealing edge (33) bounding the additional effective area (26) with respect to the associated load circuit (2).

5. A protection system according to one of claims 3 and 4, characterized in that the opening (28) at least partially radially penetrates the associated sealing edge (33).

## Revendications

1. Système de protection pour une installation à fluide de pression possédant au moins deux circuits récepteurs (1, 2), comprenant une valve de barrage (I, II) pour chaque circuit récepteur (1, 2), valve qui est placée entre un dispositif d'alimentation, par exemple une conduite d'alimentation (5), et le circuit récepteur (1 ou 2) coordonné, l'une (II) des valves de barrage présentant, tout au moins quand la pression atmosphérique règne dans les circuits récepteurs (1, 2), une pression d'ouverture accrue, ladite valve de barrage (II) comportant un élément d'actionnement (17) qui présente une face utile exposée à la pression d'alimentation,
caractérisé en ce que
l'élément d'actionnement (17) de ladite valve de barrage (II) présente une face utile supplémentaire (26) agencée entre sa face utile (25) exposée à la pression d'alimentation et le circuit récepteur (2) coordonné.

2. Système de protection selon la revendication 1,
caractérisé en ce que
la face utile supplémentaire (26) est reliée en permanence au circuit utilisateur (2) coordonné, tout au moins lorsque la valve de barrage (II) est fermée, à travers un étranglement, par exemple à travers un ajour (28).

3. Système de protection selon la revendication 2, dans lequel la face utile (25) et la face utile supplémentaire (26) sont délimitées par des bourrelets d'étanchéité sur l'élément d'actionnement (17) et/ou sur le corps de valve,
caractérisé en ce que
l'étranglement est constitué par au moins un ajour (28) pratiqué dans le bourrelet d'étanchéité (33) délimitant la face utile supplémentaire (26) par rapport au circuit récepteur (2).

4. Système de protection selon la revendication 2, dans lequel la face utile (25) et la face utile supplémentaire (26) sont délimitées par des bords d'étanchéité sur l'élément d'actionnement (17) et/ou sur le corps de valve,
caractérisé en ce que
l'étranglement est constitué au moins partiellement par une fente sur le bourrelet d'étanchéité (33) délimitant la face utile supplémentaire (26) par rapport au circuit récepteur (2) coordonné, la fente s'étendant sur au moins une partie du pourtour de ce bourrelet.

5. Système de protection selon la revendication 3 ou 4,
caractérisé en ce que l'ajour (28) traverse au moins partiellement le bourrelet d'étanchéité (33) coordonné dans le sens radial.
